# EUROPÄISCHE PATENTSCHRIFT

(11) **EP 2 397 411 B1**
(45) Veröffentlichungstag und Bekanntmachung des Hinweises auf die Patenterteilung: **22.08.2012**
(21) Anmeldenummer: 10006314.8
(22) Anmeldetag: 18.06.2010
(51) Int. Cl.: B64F 1/305

(54) **Kuppelmodul als Schnittstelle zwischen einer Fluggastbrücke und einem Flugzeug**
Coupling module as interface between a passenger bridge and an airplane
Module de couplage en tant qu'interface entre un pont de passagers et un avion

(43) Veröffentlichungstag der Anmeldung: 21.12.2011
(73) Patentinhaber: Hübner GmbH, D-34123 Kassel (DE)
(72) Erfinder: Scharf, Lothar, 37242 Bad Sooden-Allendorf (DE); Gutkuhn, Detlef, 34314 Espenau (DE)
(74) Vertreter: Walther, Walther & Hinz GbR

(56) Entgegenhaltungen:
- WO-A2-00/76847
- DE-A1- 10 046 010
- US-A- 4 333 195
- US-A- 4 559 660
- US-A1- 2002 116 771

## Beschreibung

Die Erfindung betrifft ein Kuppelmodul als Schnittstelle zwischen einer Fluggastbrücke und einem Flugzeug, wobei das Kuppelmodul ein Vordach und einen von dem Vordach überspannten Boden aufweist.

Fluggastbrücken sind aus dem Stand der Technik hinreichend bekannt. Die Fluggastbrücken dienen dem Übergang für Personen von dem Flugzeug unmittelbar in das Flughafengebäude. Da das Flughafengebäude häufig höher ist, als die Türöffnung des Flugzeugs verlaufen die Fluggastbrücken, die am vorderen Ende durch ein Fahrgestell gehalten sind, häufig schräg nach unten in Richtung auf die Türöffnung des Flugzeugs zu. Am unteren Ende der Fluggastbrücke weist die Fluggastbrücke eine um eine vertikale Achse um bis zu 90° zur Längsachse der Fluggastbrücke verschwenkbare Kabine auf, wobei am vorderen Ende ein Kuppelmodul zum Übergang von der Kabine in das Flugzeug angeordnet ist (WO 00/76847 A2). Eine ähnliche Gestaltung einer Fluggastbrücke zeigen die US 2002/0116771 A1 sowie die DE 100 46 010 A1. Eine um eine vertikale Achse verschwenkbare Kabine zeigt ebenfalls die US 4,559,660. Es wurde bereits darauf hingewiesen, dass sich die Fluggastbrücke schräg nach unten verlaufend von dem Gebäude zum Flugzeug erstreckt. Die Folge hiervon ist, dass das an der Kabine angeordnete Kuppelmodul, das einen Boden aufweist, der von einem ausstellbaren Vordach U-förmig überspannt wird, schräg stehend zum Flugzeug mit seinem an der Stirnseite des Vordachs angeordneten Bumper an der Außenhaut des Flugzeugs anliegt.

Bekannt sind ebenfalls Kuppelmodule mit einem Vordach und einem Boden, wobei der Boden um die Mittellängsachse beweglich in dem Kuppelmodul gelagert ist. Die schwenkbewegliche Lösung des Bodens im Kuppelmodul ist aufwendig. Wäre der Boden nicht schwenkbeweglich, so wäre dies unter folgenden Aspekten nachteilig:
Bei den meisten Flugzeugen gehen die Türen nach außen auf. Verläuft der Boden des Kuppelmoduls schräg stehend zum Boden des Flugzeugs, dann bedeutet das in Bezug auf die Öffnung der Tür, dass das Kuppelmodul tiefer angesetzt werden muss, um sicherzustellen, dass die Tür beim Öffnen nicht mit dem Boden des Kuppelmoduls kollidiert. Die Folge hiervon ist, dass die Neigung der Fluggastbrücke insgesamt weiter zunimmt. Dies erfordert beispielsweise zum Schieben von Rollstühlen einen erhöhten Kraftaufwand. Nachteilig ist darüber hinaus, dass aufgrund der Tatsache, dass das Kuppelmodul tiefer angesetzt werden muss, um die Öffnung der Flugzeugtür zu gewährleisten, eine relativ hohe Stufe zwischen Flugzeug einerseits und Boden des Kuppelmoduls andererseits entsteht. Dies würde die Gefahr des Stolperns der Passagiere beim Ausstieg aus oder Einstieg in das Flugzeug fördern. Die Stolperneigung würde noch dadurch erhöht, dass die Passagiere vom horizontalen Flugzeugboden auf den schräg stehenden Boden, des Kuppelmoduls, auftreten.

Eine ganze Reihe von Flugzeugen weisen über dem Türeinstieg eine Regenrinne auf. Aufgrund der schräg stehenden Fluggastbrücke und korrespondierend hierzu aufgrund der schrägen Lage des Kuppelmoduls ist es bei Anlage des Balges mit dem frontseitig angeordneten Bumper so, dass der Bumper bei Draufsicht auf die Flugzeugtür auf der rechten Seite an der Regenrinne anliegt, und auf der linken Seite oben über die Kontur des Flugzeugs übersteht. Dies ist insbesondere bei kleinen Flugzeugen der Fall, deren Kontur im Bereich der vorderen Tür unmittelbar nach der Tür zum Cockpit zu abfallend ist. Die Folge hiervon ist, dass der Bumper auf der rechten Seite der Türöffnung, mit dem er auf der Regenrinne aufliegt, relativ schnell verschleißt, und auf der linken Seite eine Öffnung gebildet wird, durch die Regen, Schnee usw. eintreten kann.

Die der Erfindung zugrunde liegende Aufgabe besteht nun darin, einerseits den Verschleiß am Bumper zu minimieren, und andererseits dafür zu sorgen, dass der Bumper umlaufend dicht an der Außenhaut des Flugzeugs im Bereich der Türöffnung des Flugzeugs anliegt.

Zur Lösung der Aufgabe wird erfindungsgemäß vorgeschlagen, dass das Kuppelmodul durch die Kabine der Fluggastbrücke um eine horizontal verlaufende Mittelachse verschwenkbar gehalten ist. Unter der Mittelachse wird im Folgenden eine gedachte Achse im Zentrum des Kuppelmoduls verstanden, um die das Kuppelmodul verschwenkbar von der Kabine der Fluggastbrücke aufnehmbar ist. Durch die Anordnung von Mitteln zur schwenkbaren Anlenkung des Kuppelmoduls an der Kabine der Fluggastbrücke entlang eines Kreisbogens wird erreicht, dass das Kuppelmodul mit der Oberkante des Bumpers immer genau parallel zur Flugzeugtür ausgerichtet werden kann. Das heißt, dass die obere Kante der Türöffnung als Referenzlinie für die Ausrichtung des Kuppelmoduls dient. Hierbei kann der Boden im Kuppelmodul feststehend ausgebildet werden, was sich positiv auf die Kosten auswirkt.

Vorteilhafte Merkmale der Erfindung und weitere Ausgestaltungen der Erfindung ergeben sich aus den Unteransprüchen.

So ist insbesondere vorgesehen, dass die Mittel zur schwenkbaren Anlenkung des Kuppelmoduls an der Kabine der Fluggastbrücke mindestens einen kreisbogenförmigen Schienenabschnitt sowie mehrere Rollen umfassen, wobei die Rollen mit dem mindestens einen Schienenabschnitt in Richtung auf das Kuppelmodul zu in formschlüssiger Verbindung mit dem Schienenabschnitt stehen. Durch die Anordnung der Rollen an der der Fluggastbrücke zugewandten Stirnseite des Kuppelmoduls und korrespondierend hierzu der Anordnung der Schienenabschnitte an der Stirnwand der Kabine der Fluggastbrücke wird erreicht, dass das Kuppelmodul um einen Kreisbogenabschnitt entlang den auf einem Kreisbogen angeordneten Schienen relativ zur Kabine verschwenkbar ist. Durch die formschlüssige Verbindung der Rollen mit dem mindestens einen Schienenabschnitt in Richtung auf das Kuppelmodul zu, wird erreicht, dass das Kuppelmodul nicht nur parallel zur Stirnseite gehalten ist, sondern auch senkrecht hierzu, also entlang der bereits erwähnten, gedachten Mittellängsachse. In diesem Zusammenhang ist vorteilhaft vorgesehen, dass die Rollen an dem mindestens einen Schienenabschnitt den Schienenabschnitt zu beiden Seiten formschlüssig erfassend an dem Kuppelmodul angebracht sind. Zu der insbesondere formschlüssigen Verbindung zwischen den Rollen und dem Schienenabschnitt ist nach einem weiteren Merkmal der Erfindung die Lauffläche der Rolle nach innen gewölbt und korrespondierend hierzu weisen die Ober- und/oder Unterseite des mindestens einen Schienenabschnitts eine nach außen gerichtete Wölbung auf.

Dadurch, dass die Rollen zu beiden Seiten den Schienenabschnitt erfassen und durch die Wölbung der Rollen und korrespondierend hierzu der Schiene zu beiden Seiten der Schiene, erfolgt die Verbindung zwischen Kuppelmodul einerseits und Kabine andererseits formschlüssig senkrecht zur Stirnseite des Kuppelmodels bzw. der Kabine.

Nach einem besonders vorteilhaften Merkmal der Erfindung weist das Kuppelmodul einen insbesondere kastenförmigen Rahmen auf, der in etwa der Kontur des U-förmigen Vordachs folgt, wobei die Mittel zur schwenkbaren Anlenkung des Kuppelmoduls an der Kabine der Fluggastbrücke, also beispielsweise die zuvor erwähnten Rollen an dem Rahmen des Kuppelmoduls und die Schienenabschnitte an der Stirnseite der Kabine angeordnet sind. In diesem Zusammenhang kann ebenfalls vorgesehen sein, dass die Fluggastbrücke korrespondierend zu dem Rahmen am Kuppelmodel einen Adapterrahmen als Gegenstück aufweist, wobei an diesem Adapterrahmen, der in der Draufsicht insbesondere ebenso kastenförmig umlaufend ausgebildet ist, wie der Rahmen an dem Kuppelmodul, die Schienenabschnitte an den beiden Schenkeln und dem Steg des kastenförmigen Adapterrahmens angebracht sind.

Der Anordnung der Schienenabschnitte an dem Adapterrahmen erfolgt hierbei kreisbogenförmig, sodass das Kuppelmodul, wie dies bereits zu eingangs erwähnt worden ist, relativ zur Kabine der Fluggastbrücke entlang eines Kreisbogens verschwenkbar durch die Fluggastbrücke gehalten ist. Die Verwendung eines lösbar mit der Kabine verbindbaren Adapterrahmens hat den Vorteil, dass durch Austausch des Adapterrahmens ein und dasselbe Kuppelmodul an Fluggastbrücken unterschiedlicher Hersteller an der Stirnseite der Kabine der jeweiligen Fluggastbrücke anbringbar ist.

Eine besonders vorteilhafte Ausgestaltung der Verbindung zwischen Kuppelmodul einerseits und der Kabine der Fluggastbrücke andererseits zeichnet sich dadurch aus, dass an der Stirnseite der Kabine oder des Adapterrahmens drei entlang eines Kreisbogenabschnitts angeordnete Schienenabschnitte befestigt sind, die ebenfalls kreisbogenförmig ausgebildet sind, wobei hierzu an dem Rahmen des Kuppelmoduls, der auf die Kabine der Fluggastbrücke zugerichtet ist, korrespondierend zu der Anordnung der Schienenabschnitte an der Fluggastbrücke entsprechende Rollen bzw. Rollenpaare vorgesehen sind. Hierbei wird der mittlere der beiden Schienenabschnitte von den Rollen zu beiden Seiten des Schienenabschnitts erfasst, wobei hierdurch bereits eine formschlüssige Anlenkung des Kuppelmoduls an der Kabine der Fluggastbrücke in Richtung senkrecht zur Stirnseite der Kabine erfolgt. Die beiden anderen Schienenabschnitte, die im Wesentlichen vertikal verlaufend an der Stirnseite der Kabine oder dem Adapterrahmen angeordnet sind und die aneinander gegenüberliegen, werden jeweils von den an der Stirnseite des Kuppelmoduls angeordneten Rollen außen erfasst. In diesem Zusammenhang sei darauf hingewiesen, dass es grundsätzlich auch ausreichend ist, wenn aufgrund der gewölbten Ausbildung der Ober- bzw. Unterseiten der Schiene und der entsprechend korrespondierenden Wölbung der Rollen bereits eine formschlüssige Anlenkung des Kuppelmoduls an der Kabine der Fluggastbrücke möglich ist, dass allerdings dadurch, dass an dem in etwa horizontal verlaufenden, mittleren Schienenabschnitt an der Stirnseite der Fluggastbrücke, der zu beiden Seiten von Rollen erfasst wird, eine höhere Sicherheit gegen Abheben des Kuppelmoduls erzielt wird. Von der Erfindung erfasst wird selbstverständlich auch eine Ausführungsform, bei der die Rollen an der Kabine der Fluggastbrücke und die Schienen am Kuppelmodul angeordnet sind. Beides gilt äquivalent, wenn an dem Kuppelmodul ein Rahmen und an der Kabine stirnseitig der Adapterrahmen angeordnet ist.

Aus den obigen Ausführungen ergibt sich, dass das Kuppelmodul gegenüber der Kabine der Fluggastbrücke um eine gedachte Mittelachse verschwenkbar an der Kabine angeordnet ist. Das heißt, dass der Boden der Kabine im Bereich des Übergangs zum Kuppelmodul schräg steht. Dem gegenüber verläuft der Boden in dem Kuppelmodul im Wesentlichen horizontal. Hieraus folgt, dass zu beiden Seiten der Mittellinie des Bodens, die die neutrale Achse darstellt, eine kleine Stufe entsteht. Zur Überbrückung der Stufe ist entweder vorgesehen, den Boden des Kuppelmoduls elastisch nachgiebig zu gestalten, wobei darauf hingewiesen wird, dass die Verschwenkung des Kuppelmoduls relativ zur Fluggastbrücke nur einige wenige Grad beträgt. Oder aber es weist der Boden des Kuppelmoduls im Übergang zum Boden der Fluggastbrücke Übergangsplatten auf, die jeweils durch ein Scharnier mit dem Boden des Kuppelmoduls verbunden sind. Diese Übergangsplatten sind dreieckförmig ausgebildet, wobei die Übergangsplatten zur Mitte des Bodens zu, also zur Mittellinie, mithin zur neutralen Achse des Bodens, spitz zulaufend ausgebildet sind, also in der Draufsicht in etwa ein dreieckförmiges Aussehen aufweisen. Durch solche Übergangsplatten können die zu beiden Seiten der Mittellinie, mithin der neutralen Achse entstehenden stufenförmigen Abstände überbrückt werden.

Zwischen der der Fluggastbrücke zugewandten Stirnseite des Kuppelmoduls und der Stirnseite der Kabine der Fluggastbrücke besteht ein Spalt. Der Spalt hat in etwa eine Breite von der Stärke der Schienenabschnitte, die an der Stirnseite der Fluggastbrücke angeordnet sind, gegebenenfalls zuzüglich der Stärke des Adapterrahmens. Zur Abdeckung des Spalts ist nach einem weiteren Merkmal der Erfindung ein Tuch vorgesehen, das den Spalt auf der Oberseite und im Bereich der Seiten überdeckt. Hierbei ist das Tuch insbesondere elastisch bzw. dehnbar ausgebildet. Die Befestigung des Tuches kann mittels Klettbänder erfolgen. Das Vordach des Kuppelmoduls, das insbesondere nach Art eines Faltenbalges ausgebildet ist, weist auf seiner dem Flugzeugrumpf zugewandten Stirnseite einen Rahmen auf, der den Bumper aufnimmt. Um nun nach Heranfahren der Fluggastbrücke an den Flugzeugrumpf das Vordach an den Rumpf des Fugzeugs anzulegen, ist eine Ausstellvorrichtung für das Vordach vorgesehen, wie sie aus dem Stand der Technik an sich bekannt ist. Die Ausstellvorrichtung umfasst hierbei jeweils einen zu beiden Seiten des Vordachs des Kuppelmoduls angeordneten Gelenkarm.

Anhand der Zeichnungen wird die Erfindung nachstehend beispielhaft näher erläutert.
- Fig. 1: zeigt in perspektivischer Darstellung die Fluggastbrücke mit einem am vorderen Ende angelenkten Kuppelmodul im verschwenkten Zustand des Kuppelmoduls relativ zur Kabine der Fluggastbrücke;
- Fig. 2: zeigt eine Ansicht auf die Stirnseite der Kabine der Fluggastbrücke, wobei die kreisbogenförmigen Schienenabschnitte erkennbar sind, sowie die Rollen, die die kreisbogenförmigen Schienenabschnitte erfassen, wobei die Rollen an dem Kuppelmodul angeordnet sind;
- Fig. 3: zeigt einen Schnitt aus Fig. 2 in vergrößerter Darstellung;
- Fig. 3a: zeigt die Verbindung der Rollen zum Schienenabschnitt;
- Fig. 4: zeigt eine Seitenansicht auf dem Übergang von der Kabine der Fluggastbrücke zum Kuppelmodul;
- Fig. 5: zeigt die Einzelheit V aus Fig. 4 in vergrößerter Darstellung;
- Fig. 6: zeigt schematisch die Ausbildung des Bodens des Kuppelmoduls mit den daran durch Scharniere angeordneten Übergangsplatten.

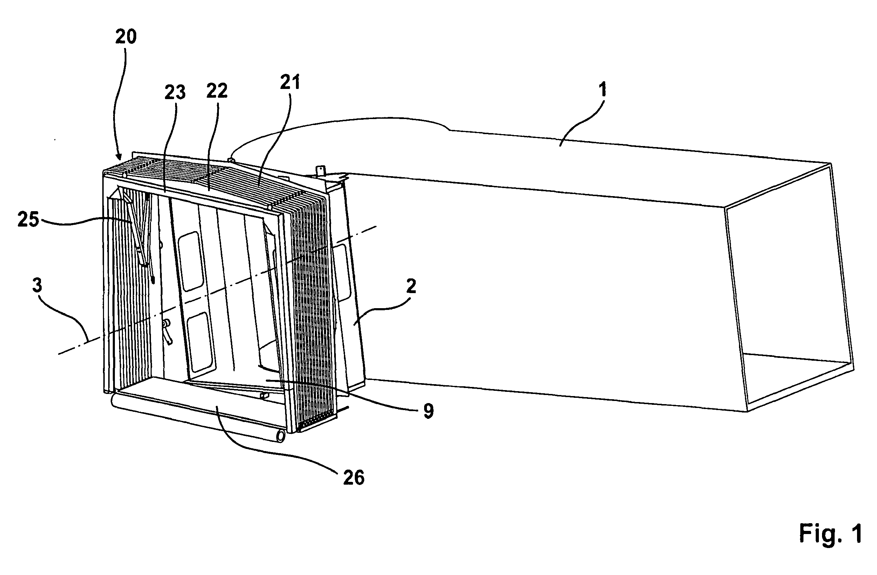

Aus der Darstellung gemäß Fig. 1 ist die mit 1 bezeichnete Fluggastbrücke erkennbar, die an ihrem vorderen Ende eine im Winkel von 90° zur Fluggastbrücke 1 abgewinkelte Kabine 2 zeigt, die allerdings Bestandteil der Fluggastbrücke 1 ist. An der Kabine 2 ist verschwenkbar um eine gedachte horizontale Achse 3 das insgesamt mit 20 bezeichnete Kuppelmodul verschwenkbar angelenkt. Das Kuppelmodul 20 zeigt auf seiner freien Stirnseite einen an dem Vordach 21 angeordneten Rahmen 22, wobei an dem Rahmen der mit 23 bezeichnete Bumper angeordnet ist. Im Inneren des Kuppelmoduls sind zu beiden Seiten jeweils ein Gelenkarm 25 vorgesehen, der der Ausstellbewegung des Vordachs 21 des Kuppelmoduls 20 dient, um schlussendlich den Bumper 23 an die Außenhaut des Flugzeugrumpfs anlegen zu können. Das Kuppelmodul 20 zeigt darüber hinaus den Boden 26, auf den die Passagiere unmittelbar nach Verlassen des Flugzeugs auftreten.

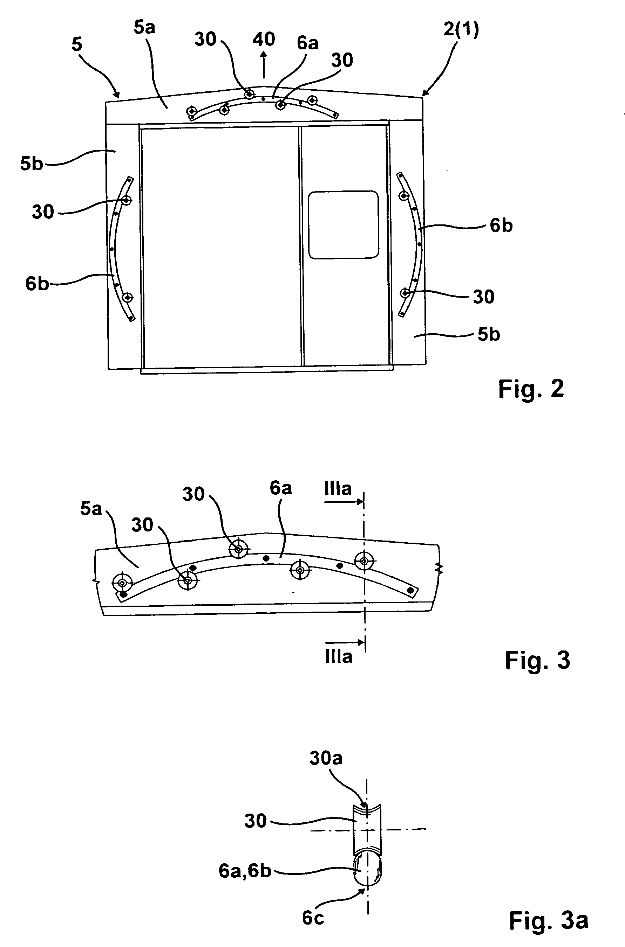

Gegenstand der Erfindung ist nunmehr die schwenkbare Anlenkung des Kuppelmoduls 20 an der Kabine 2 der Fluggastbrücke 1. Insofern zeigt Fig. 2 eine Ansicht auf die Stirnseite der Kabine 2 der Fluggastbrücke 1, wobei die Kabine 2 einen an der Stirnseite der Kabine anschraubbaren Adapterrahmen 5 aufweist, wobei der Adapterrahmen 5 um den Boden 9 kastenförmig umläuft und einen Steg 5a und zwei Schenkel 5b zeigt. Sowohl auf den beiden Schenkeln 5b als auch auf dem Steg 5a sind kreisbogenförmige Schienenabschnitte 6a und 6b befestigt. Die Anordnung der kreisbogenförmigen Schienenabschnitte 6a, 6b erfolgt, wie dies aus Fig. 2 sehr deutlich zu erkennen ist, auf einem Kreisabschnitt.

An Flughäfen sind Fluggastbrücken unterschiedlicher Hersteller im Einsatz. Bislang ist es so, dass jeder Fluggastbrücke eines Herstellers ein bestimmtes Kuppelmodul zugeordnet ist. Ein austauschbarer Adapterrahmen eröffnet nunmehr die Möglichkeit, ein und dasselbe Kuppelmodul an Fluggastbrücken unterschiedlicher Hersteller anzubringen. Es ist lediglich der Adapterrahmen 5 auszutauschen. Die Adapterrahmen 5 mögen sich insofern in ihrer Größe in Bezug auf die sie aufnehmende Kabine 2 der Fluggastbrücke unterscheiden; auf der dem Kuppelmodul 20 zugewandten Stirnseite zeigen sie jedoch immer die Schienenabschnitte 6a, 6b in gleicher Anordnung passend zu der Anordnung der Rollen 30 an dem Rahmen 29 des Kuppelmoduls 20.

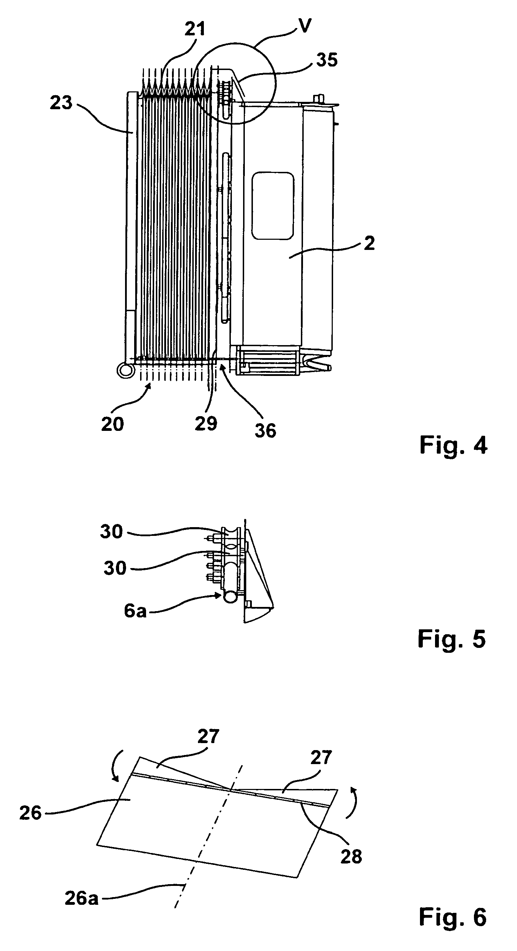

Das Kuppelmodul 20 zeigt, wie sich dies aus der Fig. 4 ergibt, auf seiner der Kabine 2 der Fluggastbrücke zugewandten Stirnseite den Rahmen 29, wobei an dem Rahmen 29 die in Fig. 2 dargestellten Rollen 30 erkennbar sind. Die Ausbildung der Rollen 30 einerseits und der kreisbogenförmigen Schienenabschnitte 6a, 6b andererseits, ergibt sich im Einzelnen aus der schematischen, vergrößerten Darstellung gemäß Fig. 3a, wobei hieraus erkennbar ist, dass die Rollen 30 eine nach innen gerichtete Wölbung 31 aufweisen und korrespondierend hierzu die Schienenabschnitte 6a, 6b eine nach außen gerichtete Wölbung 6c. Erkennbar ist, dass der auf dem horizontal verlaufenden Steg 5a des Rahmens 5 der Kabine 2 der Fluggastbrücke 1 angeordnete kreisbogenförmigen Schienenabschnitt 6a von Rollen 30 zu beiden Seiten erfasst wird. Die beiden kreisbogenförmigen Schienenabschnitte 6b, die auf den Schenkeln 5b des Rahmens 5 der Kabine 2 der Fluggastbrücke angeordnet sind, stehen ebenfalls mit Rollen 30 in Verbindung, wobei die Rollen 30 allerdings lediglich zu einer Seite des kreisbogenförmigen Schienenabschnitts angeordnet sind. Die zu beiden Seiten des Schienenabschnitts 6a angeordneten Rollen 30 verhindern insbesondere ein Abheben des Kuppelmoduls von der Fluggastbrücke in Richtung des Pfeiles 40, wenn die Ausbildung der Rollen 30 einerseits und die korrespondierende Ausbildung der Schienenabschnitte 6a, 6b mit den entsprechenden Wölbungen 30a, 6c vorgenommen ist.

Wie insbesondere aus Fig. 4 erkennbar, ist an dem Balg 21 ein insbesondere dehnbares Tuch 35 angeordnet, wobei das Tuch 35 den Spalt 36 zwischen Kuppelmodul 20 und Kabine 2 überdeckt. Die Befestigung des Tuches, das insbesondere umlaufend an dem Kuppelmodul befestigt ist und demzufolge den Spalt 36 im Bereich der Schenkel 5b und des Stegs 5a abdeckt, ist vorteilhaft mittels Klettbandverschlüssen sowohl an dem Kuppelmodul als auch an dem Kopfteil 2 befestigt, ohne dass dies näher gezeigt ist.

Insbesondere aus Fig. 1 ist erkennbar, dass der Boden 9 der Kabine 2 der Fluggastbrücke 1 schräg zum Boden 26 des Kuppelmoduls verläuft. Der Winkel zwischen dem Boden 26 des Kuppelmoduls und dem Boden 9 der Kabine liegt etwa zwischen 5 und 6°. Gleichwohl der Winkel relativ gering ist, entsteht zwischen dem Boden 26 des Kuppelmoduls und dem Boden 9 der Kabine zu beiden Seiten der Mittellinie des Bodens 26 des Kuppelmoduls eine Stufe, wobei zur Überbrückung der Stufe jeweils zu beiden Seiten der Mittellinie 26a des Bodens 26 eine Überbrückungsplatte 27 vorgesehen ist, die mittels eines Scharniers 28 am Boden 26 des Kuppelmoduls befestigt ist.

## Patentansprüche

1. Kuppelmodul (20) als Schnittstelle zwischen der Kabine (2) einer Fluggastbrücke (1) und einem Flugzeug, wobei das Kuppelmodul (20) ein Vordach (21) und einen von dem Vordach überspannten Boden (26) aufweist,
**dadurch gekennzeichnet,**
**dass** das Kuppelmodul (20) durch die Kabine (2) der Fluggastbrücke (1) um eine horizontal verlaufende Mittellängsachse (3) verschwenkbar gehalten ist.

2. Kuppelmodul nach Anspruch 1,
**dadurch gekennzeichnet,**
**dass** zwischen Kuppelmodul (20) und die Kabine (2) der Fluggastbrücke (1) Mittel (6a, 6b, 30) zur schwenkbaren Anlenkung des Kuppelmoduls (20) an der Kabine (2) entlang einem Kreisbogen vorgesehen sind.

3. Kuppelmodul nach Anspruch 2
**dadurch gekennzeichnet,**
**dass** die Mittel zur schwenkbaren Anlenkung des Kuppelmoduls (20) an der Kabine (2) mindestens einen kreisbogenförmigen Schienenabschnitt (6a, 6b) sowie mehrere Rollen (30) umfassen, wobei die Rollen (30) mit dem mindestens einen Schienenabschnitt (6a, 6b) in Richtung auf das Kuppelmodul (20) zu in formschlüssiger Verbindung mit dem mindestens einen Schienenabschnitt (6a, 6b) stehen.

4. Kuppelmodul nach Anspruch 3
**dadurch gekennzeichnet,**
**dass** die Rollen (30) den mindestens einen Schienenabschnitt (6a, 6b) zu beiden Seiten erfassen.

5. Kuppelmodul nach einem der Ansprüche 3 oder 4,
**dadurch gekennzeichnet,**
**dass** die Lauffläche (30a) der Rollen (30) nach innen gewölbt ist, und korrespondierend hierzu die Ober- und/oder Unterseite (6c) des mindestens einen Schienenabschnitt (6a, 6b) eine nach außen gerichtete Wölbung aufweist.

6. Kuppelmodul nach einem der Ansprüche 2 bis 5,
**dadurch gekennzeichnet,**
**dass** das Kuppelmodul (20) einen Rahmen (29) aufweist, wobei die Mittel zur schwenkbaren Anlenkung des Kuppelmoduls (20) an der Kabine (2) der Fluggastbrücke (1) an dem Rahmen (29) und an der Stirnseite der Kabine (2) angeordnet sind.

7. Kuppelmodul nach Anspruch 6,
**dadurch gekennzeichnet,**
**dass** die Kabine (2) der Fluggastbrücke (1) zur Aufnahme der Mittel (6a, 6b) zur schwenkbaren Anlenkung des Kuppelmoduls (20) an der Kabine (2) einen Adapterrahmen (5) aufweist, der korrespondierend zu dem Rahmen (29) des Kuppelmoduls (20) ausgebildet ist.

8. Kuppelmodul nach einem der Ansprüche 3 bis 7,
**dadurch gekennzeichnet,**
**dass** an der Stirnseite der Kabine (2) der Fluggastbrücke (1) entlang eines Kreisabschnitts drei kreisbogenförmige Schienenabschnitte (6a, 6b) angeordnet sind, wobei an dem Rahmen (29) des Kuppelmoduls (20) korrespondierend hierzu die entsprechenden Rollen (30) angeordnet sind.

9. Kuppelmodul nach einem der Ansprüche 6 bis 8,
**dadurch gekennzeichnet,**
**dass** der Rahmen (29) des Kuppelmoduls (20) in der stirnseitigen Ansicht in etwa kastenförmig umlaufend ausgebildet ist, wobei die Rollen (30) an den Schenkeln (5b) und dem Steg (5a) des Rahmens (29) angebracht sind.

10. Kuppelmodul nach Anspruch 7 oder einem der ansprüche 8 bis 9 wenn abhängig von anspruch 7
**dadurch gekennzeichnet,**
**dass** der kreisbogenförmige Schienenabschnitt (6a), der an der Oberseite der Stirnseite der Kabine (2) oder des Adapterrahmens (5) angeordnet ist, zu beiden Seiten durch Rollen (30) erfasst wird.

11. Kuppelmodul nach einem nach anspruch 7 und gleichzeitig 8 oder der Ansprüche 9 bis 10 wenn von 7 und 8 abhängig,
**dadurch gekennzeichnet,**
**dass** die kreisbogenförmigen Schienenabschnitte (6b), die seitlich an der Stirnseite der Kabine (2) oder des Adapterrahmens (5) angeordnet sind, lediglich von einer Seite von Rollen (30) erfasst sind.

12. Kuppelmodul nach einem der voranstehenden Ansprüche,
**dadurch gekennzeichnet,**
**dass** der Boden (26) des Kuppelmoduls (20) im Bereich des Übergangs zum Boden (9) der Kabine (2) elastisch nachgiebig ausgebildet ist.

13. Kuppelmodul nach einem der voranstehenden Ansprüche,
**dadurch gekennzeichnet,**
**dass** das kuppelmodul endseitig die kabine (2) aufweist die in abwinkelbarer Stellung zur Fluggastbrücke (1) an der Fluggastbrüche befestigt ist, wobei die Kabine das kuppelmodul (20) un die Mittellängsachse (3) verschwenkbar aufnimmt.

14. Kuppelmodul nach einem der voranstehenden Ansprüche,
**dadurch gekennzeichnet,**
**dass** der Boden (26) des Kuppelmoduls (20) im Übergang zum Boden (9) der Kabine (2) der Fluggastbrücke (1) Übergangsplatten (27) aufweist, die jeweils durch ein Scharnier (28) mit dem Boden (9) des Kuppelmoduls (20) verbunden sind.

15. Kuppelmodul nach Anspruch 14,
**dadurch gekennzeichnet,**
**dass** die Übergangsplatten (27) dreieckförmig ausgebildet sind, wobei die Übergangsplatten (27) zur Mitte des Bodens (26) des Kuppelmoduls (20) spitz zulaufen.

16. Kuppelmodul nach einem der voranstehenden Ansprüche,
**dadurch gekennzeichnet,**
**dass** das Vordach (21) U-förmig ausgebildet ist.

17. Kuppelmodul nach einem der Ansprüche 7 bis 16,
**dadurch gekennzeichnet,**
**dass** sowohl der Rahmen (29) des Kuppelmoduls (20) als auch der Adapterrahmen (5) der Fluggastbrücke (1) kastenförmig umlaufend ausgebildet sind.

18. Kuppelmodul nach einem der voranstehenden Ansprüche,
**dadurch gekennzeichnet,**
**dass** der Spalt (36) zwischen Kuppelmodul (20) und Kabine (2) Fluggastbrücke (1) durch ein kunststoffbeschichtetes, insbesondere dehnbares Tuch (35) abdeckbar ist.

19. Kuppelmodul nach einem der voranstehenden Ansprüche,
**dadurch gekennzeichnet,**
**dass** das Vordach (21) des Kuppelmoduls (20) ausstellbar ist.

20. Kuppelmodul nach einem der voranstehenden Ansprüche,
**dadurch gekennzeichnet,**
**dass** das Vordach (21) an seiner Stirnseite einen Bumper (23) aufweist.

## Claims

1. Coupling module (20) as interface between the cabin (2) of an air passenger bridge (1) and an aircraft, wherein the coupling module (20) has a canopy roof (21) and a floor (26) spanned over by the canopy roof, **characterized in that** the coupling module (20) is mounted by the cabin (2) of the air passenger bridge (1) to be pivotable about a horizontally running centre longitudinal axis (3).

2. Coupling module according to claim 1, **characterized in that** means (6a, 6b, 30) for pivotable articulation of the coupling module (20) to the cabin (2) along an arc are provided between coupling module (20) and the cabin (2) of the air passenger bridge (1).

3. Coupling module according to claim 2, **characterized in that** means for pivotable articulation of the coupling module (20) to the cabin (2) comprise at least one arcuate rail section (6a, 6b) as well as a plurality of rollers (30), wherein the rollers (30) with the at least one rail section (6a, 6b) are disposed in mechanically positive connection with the at least one rail section (6a, 6b) in direction towards the coupling module (20).

4. Coupling module according to claim 3, **characterized in that** the rollers (30) engage the at least one rail section (6a, 6b) at both sides.

5. Coupling module according to one of the claims 3 or 4, **characterized in that** the running surface (30a) of the rollers (30) is inwardly curved and corresponding thereto the upper and/or lower side (6c) of the at least one rail section (6a, 6b) has or have an outwardly directed curvature.

6. Coupling module according to one of the claims 2 to 5, **characterized in that** the coupling module (20) comprises a frame (29), wherein the means for pivotable articulation of the coupling module (20) to the cabin (2) of the air passenger bridge (1) are arranged at the frame and at the end face of the cabin (2).

7. Coupling module according to claim 6, **characterised in that** the cabin (2) of the air passenger bridge (1) comprises an adapter frame (5), which is constructed to match the frame (29) of the coupling module (20), for reception of the means (6a, 6b) for pivotable articulation of the coupling module (20) to the cabin (2).

8. Coupling module according to one of the claims 3 to 7, **characterized in that** three arcuate rail sections (6a, 6b) are arranged at the end face of the cabin (2) of the air passenger bridge (1) along an arc, wherein the corresponding rollers (30) are arranged at the frame (29) of the coupling module (20) to match the rail sections.

9. Coupling module according to one of the claims 6 to 8, **characterized in that** the frame (29) of the coupling module (20) is in end view peripherally approximately box-shaped, wherein the rollers (30) are mounted at the limbs (5b) and the web (5a) of the frame (29).

10. Coupling module according to claim 7 or to one of the claims 8 to 9 if dependent of claim 7, **characterized in that** the arcuate rail section (6a) arranged at the upper side of the end face of the cabin (2) or of the adapter frame (5) is engaged by rollers (30) at both sides.

11. Coupling module according to claim 7 and concurrently 8 or according to one of the claims 9 to 10 if dependent on 7 and 8, **characterized in that** the arcuate rail sections (6b) arranged laterally at the end face of the cabin (2) or of the adapter frame (5) are engaged by rollers (30) merely from one side.

12. Coupling module according to one of the afore-mentioned claims, **characterized in that** the floor (26) of the coupling module (20) is constructed to be resiliently flexible in the region of the transition to the floor (9) of the cabin (2).

13. Coupling module according to one of the afore-mentioned claims, **characterized in that** the coupling module has at the end the cabin (2), which is mounted to the air passenger bridge (1) in a pivotable position relative to the air passenger bridge (1), wherein the cabin receives the coupling module (20) so that it is pivotable about the centre longitudinal axis (3).

14. Coupling module according to one of the afore-mentioned claims, **characterized in that** at the transition to the floor (9) of the cabin (2) of the air passenger bridge (1) the floor (26) of the coupling module (20) has transition plates (27) which are each connected by a respective hinge (28) with the floor (9) of the coupling module (20).

15. Coupling module according to claim 14, **characterized in that** the transition plates (27) are of triangular construction, wherein the transition plates (27) taper to a point towards the centre of the floor (26) of the coupling module (20).

16. Coupling module according to one of the afore-mentioned claims, **characterized in that** the canopy roof (21) is of U-shaped construction.

17. coupling module according to claim 7 to 16, **characterized in that** both the frame (29) of the coupling module (20) and the adapter frame (5) of the air passenger bridge (1) have a peripherally box-shaped construction.

18. Coupling module according to one of the afore-mentioned claims, **characterized in that** a gap (36) between coupling module (20) and cabin (2) of the air passenger bridge (1), is coverable by a plasticcoated, more specifically stretchable fabric (35).

19. Coupling module according to one of the afore-mentioned claims, **characterized in that** the canopy roof (21) of the coupling module (20) is extensible.

20. Coupling module according to one of the afore-mentioned claims, **characterized in that** the canopy roof (21) has a bumper (23) at its end face.

## Revendications

1. Module de couplage (20) formant interface entre une cabine (2) d'une passerelle passagers d'avion (1) et un avion, dans lequel le module de couplage (20) comporte un avant-toit (21) et un plancher (26) qui est surplombé par l'avant-toit,
**caractérisé en ce que**
le module de couplage (20) est tenu par la cabine (2) de la passerelle passagers d'avion (1) de façon à pouvoir pivoter autour d'un axe longitudinal médian (3) s'étendant horizontalement.

2. Module de couplage selon la revendication 1,
**caractérisé en ce que**
des moyens (6a, 6b, 30) pour articuler le module de couplage (20) à la cabine (2) d'une façon qui lui permet de pivoter selon un arc de cercle sont prévus entre le module de couplage (20) et la cabine (2) de la passerelle passagers d'avion (1).

3. Module de couplage selon la revendication 2,
**caractérisé en ce que**
les moyens pour articuler le module de couplage (20) à la cabine (2) d'une façon qui lui permet de pivoter comprennent au moins un tronçon de rail en forme d'arc de cercle (6a, 6b), ainsi que plusieurs galets (30), les galets (30) étant en liaison par complémentarité de forme avec l'au moins un tronçon de rail (6a, 6b) en direction du module de couplage (20) avec l'au moins un segment de rail (6a, 6b).

4. Module de couplage selon la revendication 3,
**caractérisé en ce que**
les galets (30) tiennent l'au moins un tronçon de rail (6a, 6b) sur les deux côtés.

5. Module de couplage selon l'une des revendications 3 ou 4,
**caractérisé en ce que**
la surface de roulement (30a) des galets (30) est bombée vers l'intérieur et, de façon correspondante, le côté supérieur et/ou le côté inférieur (6c) de l'au moins un tronçon de rail (6a, 6b) présente un bombement dirigé vers l'extérieur.

6. Module de couplage selon l'une des revendications 2 à 5,
**caractérisé en ce que**
le module de couplage (20) comporte un cadre (29), les moyens pour l'articulation du module de couplage (20) à la cabine (2) de la passerelle passagers d'avion (1) qui permet le pivotement étant agencés sur le cadre (29) et sur le côté frontal de la cabine (2).

7. Module de couplage selon la revendication 6,
**caractérisé en ce que**
la cabine (2) de la passerelle passagers d'avion (1) comporte, pour recevoir les moyens (6a, 6b) pour l'articulation du module de couplage (20) à la cabine (2) qui permettent le pivotement, un cadre adaptateur (5) qui est configuré de façon à correspondre au cadre (29) du module de couplage (20).

8. Module de couplage selon l'une des revendications 3 à 7,
**caractérisé en ce que**
trois tronçons de rail en forme d'arc de cercle (6a, 6b) sont disposés sur la face frontale de la cabine (2) de la passerelle passagers d'avion (1), le long d'un segment de cercle, les galets correspondants (30) étant disposés d'une façon correspondante sur le cadre (29) du module de couplage (20).

9. Module de couplage selon l'une des revendications 6 à 8,
**caractérisé en ce que**
le cadre (29) du module de couplage (20) est configuré pour s'étendre, dans une vue frontale, sur tout le tour à peu près en forme de boîte, les galets (30) étant agencés sur les branches (5b) et sur la barre (5a) du cadre (29).

10. Module de couplage selon la revendication 7 ou l'une des revendications 8 à 9, si elle dépend de la revendication 7.
**caractérisé en ce que**
le tronçon de rail en forme d'arc de cercle (6a) qui est disposé sur le côté supérieur du côté frontal de la cabine (2) ou du cadre adaptateur (5) est tenu des deux côtés par des galets (30).

11. Module de couplage selon l'une des revendications 9 à 10, si elle dépend des revendications 7 et 8,
**caractérisé en ce que**
les tronçons de rail en forme d'arc de cercle (6b) qui sont disposés latéralement sur le côté frontal de la cabine (2) ou du cadre adaptateur (5) sont tenus par des galets (30) uniquement sur un côté.

12. Module de couplage selon l'une des revendications précédentes,
**caractérisé en ce que**
le plancher (26) du module de couplage (20) est d'une constitution flexible et élastique dans la région de la transition avec le plancher (9) de la cabine (2).

13. Module de couplage selon l'une des revendications précédentes,
**caractérisé en ce que**
le module de couplage comporte en bout la cabine (2) qui, dans une position pouvant être orientée vers la passerelle passagers (1), est fixée à la passerelle passagers d'avion, la cabine du module de couplage (20) recevant l'axe médian longitudinal (3) de façon pivotante.

14. Module de couplage selon l'une des revendications précédentes,
**caractérisé en ce que**
le plancher (26) du module de couplage (20) comporte, au niveau de la transition avec le plancher (9) de la cabine (2) de la passerelle passagers d'avion (1), des plaques de transition (27) qui sont reliées chacune par une charnière (28) au plancher (9) du module de couplage (20).

15. Module de couplage selon la revendication 14,
**caractérisé en ce que**
les plaques de transition (27) sont de forme triangulaire, ces plaques de transition (27) s'étendant en T vers le milieu du plancher (26) du module de couplage (20).

16. Module de couplage selon l'une des revendications précédentes,
**caractérisé en ce que**
l'avant-toit (21) est en forme de U.

17. Module de couplage selon l'une des revendications 7 à 16,
**caractérisé en ce que**
le cadre (29) du module de couplage (20), aussi bien que le cadre adaptateur (5) de la passerelle passagers d'avion (1), sont formés sur tout le tour en forme de boîte.

18. Module de couplage selon l'une des revendications précédentes,
**caractérisé en ce que**
la fente (36) entre le module de couplage (20) et la cabine (2) de la passerelle passagers d'avion (1) peut être recouverte par un tissu revêtu de matière plastique, en particulier un tissu extensible (35).

19. Module de couplage selon l'une des revendications précédentes,
**caractérisé en ce que**
l'avant-toit (21) du module de couplage (20) peut être placé en projection.

20. Module de couplage selon l'une des revendications précédentes,
**caractérisé en ce que**
l'avant-toit (21) comporte un pare-chocs (23) sur son côté frontal.
